# FASCICULE DE BREVET EUROPEEN

(11) **EP 1 495 473 B1**
(45) Date de publication et mention de la délivrance du brevet: **22.08.2007**
(21) Numéro de dépôt: 03746323.9
(22) Date de dépôt: 07.04.2003
(51) Int. Cl.: G21D 5/08

(54) **PROCEDE ET DISPOSITIF DE PRODUCTION D'ELECTRICITE A PARTIR DE LA CHALEUR PRODUITE DANS LE COEUR D'AU MOINS UN REACTEUR NUCLEAIRE A HAUTE TEMPERATURE**
VERFAHREN UND EINRICHTUNG ZUR STROMERZEUGUNG AUS DER IM KERN MINDESTENS EINES HOCHTEMPERATUR-KERNREAKTORS ERZEUGTEN WÄRME
METHOD AND DEVICE FOR THE PRODUCTION OF ELECTRICITY FROM THE HEAT PRODUCED IN THE CORE OF AT LEAST ONE HIGH-TEMPERATURE NUCLEAR REACTOR

(30) Priorité: 12.04.2002 FR 0204638
(43) Date de publication de la demande: 12.01.2005
(73) Titulaire: Areva NP, 92400 Courbevoie (FR)
(72) Inventeur: LECOMTE, Michel, F-92500 Rueil-Malmaison (FR)
(74) Mandataire: Bouget, Lucien
(86) Numéro de dépôt international: PCT/FR2003/001091
(87) Numéro de publication internationale: WO 2003/088266

(56) Documents cités:
- GB-A- 2 050 679
- US-A- 3 218 802
- US-A- 4 045 285

## Description

L'invention concerne un procédé et un dispositif de production d'électricité à partir de la chaleur produite dans le coeur d'au moins un réacteur nucléaire et en particulier d'un réacteur nucléaire à haute température.

On connaît des réacteurs nucléaires dont le fluide caloporteur est, dans le réacteur nucléaire en fonctionnement, à une température élevée (par exemple supérieure à 800°C), comparativement à la température du caloporteur de réacteurs de production d'électricité tels que les réacteurs PWR dont le caloporteur est à une température de l'ordre de 320°C.

De tels réacteurs à haute température sont refroidis par un fluide caloporteur qui est généralement un gaz tel que l'hélium qui présente de très bonnes caractéristiques d'échange thermique et qui est totalement inerte.

A la sortie du coeur du réacteur nucléaire, le gaz caloporteur est à une température sensiblement égale à la température du coeur, par exemple à une température de 850°C.

On a proposé dans certains procédés de production d'électricité, d'utiliser directement l'hélium échauffé au contact du coeur du réacteur nucléaire, pour entraîner une turbine à gaz couplée à un générateur d'électricité tel qu'un alternateur.

L'hélium utilisé pour l'entraînement de la turbine à gaz présente, à la sortie de la turbine, une pression sensiblement inférieure à la pression de l'hélium caloporteur utilisé pour le refroidissement du coeur du réacteur nucléaire. L'hélium récupéré à la sortie de la turbine doit donc être recomprimé avant d'être renvoyé à l'intérieur de la cuve du réacteur nucléaire pour assurer le refroidissement du coeur. On doit donc utiliser plusieurs étages de compresseurs basse pression et haute pression pour recomprimer l'hélium récupéré à la sortie de la turbine avant de le renvoyer dans la cuve du réacteur nucléaire au contact du coeur. De préférence, des échangeurs de chaleur doivent être également associés aux étages de compression de l'hélium pour régler la température de l'hélium, de manière à faire fonctionner les compresseurs avec des rendements énergétiques acceptables.

Dans de telles installations, les compresseurs qui sont entraînés par l'arbre de la turbine consomment une quantité d'énergie notable qui ne peut être transformée en électricité par l'alternateur, de sorte que le rendement global de l'installation est réduit d'autant.

De plus, un tel dispositif de production d'électricité à partir de la chaleur produite dans le coeur d'un réacteur nucléaire à haute température à cycle direct et utilisant l'hélium comme gaz caloporteur doit fonctionner en circuit totalement fermé et il est nécessaire de limiter au maximum les déperditions d'hélium sur le circuit fermé du dispositif de production d'électricité.

Il est nécessaire de concevoir une turbine et des compresseurs d'une technologie spécifique et peu habituelle du fait que le gaz d'entraînement de la turbine dont on assure la recompression dans les étages de compresseurs est un gaz léger ayant une forte capacité de diffusion. Il faut concevoir des paliers et des joints d'étanchéité de type particulier et des échangeurs de chaleur permettant d'abaisser la température à l'entrée des étages de compresseurs pour obtenir un meilleur rendement énergétique de ces compresseurs.

De manière générale, l'ensemble des éléments utilisés et en particulier la turbine et les compresseurs doivent être étudiés et conçus spécialement pour une utilisation dans un cycle direct avec l'hélium comme gaz de travail.

L'étude et la conception des différents éléments, et en particulier des turbines et compresseurs, s'avèrent d'autant plus coûteuses qu'on s'éloigne des techniques habituelles d'utilisation des turbines à gaz.

En outre, l'hélium utilisé pour l'entraînement de la turbine et qui est recomprimé dans les compresseurs constitue le fluide primaire caloporteur qui vient en contact avec les éléments du coeur du réacteur nucléaire, de sorte qu'il est susceptible de se charger en produits présentant une certaine activité. La turbine, les compresseurs, les échangeurs de chaleur et le générateur électrique doivent être disposés à l'intérieur d'une enceinte fermée de manière étanche qui est disposée à proximité de la cuve du réacteur nucléaire, de manière à assurer le passage de l'hélium caloporteur provenant du coeur du réacteur nucléaire ou renvoyé dans le coeur et ainsi à confiner l'activité.

On a proposé des dispositifs de production d'électricité à partir d'un réacteur nucléaire à haute température refroidi par de l'hélium dans lesquels la turbine n'est pas entraînée par un gaz susceptible de renfermer des éléments activés au contact du coeur. Pour cela, on utilise un échangeur intermédiaire entre l'hélium caloporteur circulant au contact du coeur du réacteur nucléaire en circuit fermé et de l'hélium secondaire circulant également en circuit fermé et assurant l'entraînement de la turbine à gaz. Toutefois, dans un tel cycle à deux fluides utilisant de l'hélium primaire et de l'hélium secondaire, les inconvénients relatifs à la conception de la turbine et des compresseurs ainsi que des autres éléments de la partie secondaire du dispositif subsistent, du fait que le fluide secondaire est constitué par de l'hélium. En outre, il est nécessaire de concevoir un échangeur intermédiaire dans lequel circulent le fluide primaire et le fluide secondaire qui sont tous deux constitués par de l'hélium.

Par ailleurs, on connaît des installations de production d'énergie électrique comportant une turbine à gaz qui est entraînée par de l'air à très haute température et à haute pression.

L'air à très haute température et à haute pression qui assure l'entraînement de la turbine est produit dans une chambre de combustion dans laquelle on introduit de l'air comburant sous haute pression et un combustible qui peut être du gaz naturel. On obtient, à la sortie de la chambre de combustion, un mélange d'air et de gaz de combustion à très hautes pression et température, par exemple à 1300°C, qui renferme les produits de combustion tels que le CO₂, le CO et des oxydes d'azote. On utilise, dans ce cas, une turbine à gaz à haute performance dont la conception et les matériaux constitutifs permettent le fonctionnement avec un gaz à très haute température. Une telle installation fonctionne en circuit ouvert, les gaz utilisés pour l'entraînement de la turbine et constitués principalement par de l'air étant renvoyés à l'atmosphère.

En effet, il faut introduire, dans la chambre de combustion, de l'air neuf renfermant une proportion suffisante d'oxygène pour permettre la combustion du gaz naturel.

Avant d'être rejeté à l'atmosphère, le gaz à haute température sortant de la turbine à gaz peut être envoyé dans un ou, successivement, dans plusieurs générateurs de vapeur ou échangeurs de chaleur alimentés en eau, en vapeur humide ou en eau supercritique, pour produire de la vapeur sèche qui permet l'entraînement d'une ou plusieurs turbines à vapeur.

Généralement, on utilise trois étages de turbine à haute, moyenne et basse pressions qui sont placés sur un même arbre que la turbine à gaz, pour entraîner le générateur électrique. La vapeur à la sortie de la turbine à vapeur à basse pression est envoyée dans un condenseur et l'eau condensée est recyclée dans la partie secondaire d'un générateur de vapeur fournissant de la vapeur à l'étage haute pression.

Une telle installation présente l'avantage de ne comporter que des composants de type classique, tels qu'une turbine à gaz entraînée par un gaz de combustion renfermant principalement de l'azote et des gaz de combustion et des turbines à vapeur qui sont des composants tout à fait classiques dans les installations de production d'électricité.

Toutefois, le rendement énergétique de telles installations n'est pas optimal, dans la mesure où les gaz rejetés à l'atmosphère renferment encore une quantité notable de chaleur qui n'est pas utilisée.

En outre, il semble difficile d'adapter une telle configuration à cycle ouvert dans le cas où la chaleur est produite dans le coeur d'un réacteur nucléaire à haute température.

Dans le GB-2.050.679, on propose un procédé et une installation d'utilisation de la chaleur fournie par un réacteur nucléaire refroidi par de l'hélium, mettant en oeuvre un circuit secondaire disposé à l'extérieur du bâtiment de sécurité du réacteur nucléaire dans lequel on met en circulation un mélange gazeux constitué par de l'hélium et de l'azote qui est échauffé par l'hélium de refroidissement du réacteur nucléaire. Sur le circuit secondaire sont disposés une turbine à gaz, des refroidisseurs et des compresseurs dans lesquels le gaz secondaire circule en circuit fermé.

Le but de l'invention est donc de proposer un procédé de production d'électricité à partir de la chaleur produite dans le coeur d'au moins un réacteur nucléaire à haute température, consistant à faire circuler un premier gaz d'échange thermique caloporteur au contact du coeur du réacteur nucléaire, en circuit fermé, à échauffer un second gaz d'échange thermique par échange de chaleur avec le premier gaz d'échange thermique et à utiliser le second gaz d'échange thermique échauffé par le premier gaz d'échange thermique, pour entraîner au moins une turbine à gaz couplée à une génératrice électrique, ce procédé permettant d'obtenir un très bon rendement énergétique et d'utiliser des composants de type classique ne nécessitant pas d'étude de conception poussée.

Dans ce but, le premier gaz d'échange est constitué principalement par de l'hélium, le second gaz d'échange renferme en volume substantiellement de 50 % à 70 % d'hélium et de 50 % à 30 % d'azote, on met en circulation le second gaz d'échange thermique en circuit fermé, de manière que le second gaz d'échange thermique échauffé par le premier gaz d'échange thermique assure l'entraînement de l'au moins une turbine à gaz, et on récupère au moins une première partie de la chaleur du second gaz d'échange ayant traversé la turbine à gaz pour assurer l'échauffement et la vaporisation d'eau, dans au moins un générateur de vapeur, de manière à produire de la vapeur pour entraîner au moins une turbine à vapeur couplée à la génératrice électrique.

Il peut être avantageux de récupérer au moins une partie du second fluide d'échange thermique, par exemple à la sortie de la partie primaire du générateur de vapeur ou de la turbine à gaz, pour assurer un apport de chaleur à une installation annexe telle qu'un système de chauffage urbain ou une usine de dessalement d'eau de mer ou toute autre utilisation de chaleur industrielle.

Dans certains cas, on peut envisager d'utiliser une fraction du second fluide d'échange thermique échauffé à la température du premier fluide constituant le fluide caloporteur du réacteur nucléaire pour assurer une fonction nécessitant un gaz à très haute température, tel que la production d'hydrogène.

L'invention est également relative à une installation de production d'électricité mettant en oeuvre le procédé suivant l'invention.

Afin de bien faire comprendre l'invention, on va décrire à titre d'exemple, en se référant aux figures jointes en annexe, un mode de réalisation d'une installation de production d'électricité et de chaleur mettant en oeuvre le procédé selon l'invention.
La figure 1 est une vue schématique générale de l'ensemble de l'installation suivant l'invention.
La figure 2 est une vue schématique générale de l'ensemble d'une installation, suivant une variante de réalisation à deux réacteurs nucléaires.

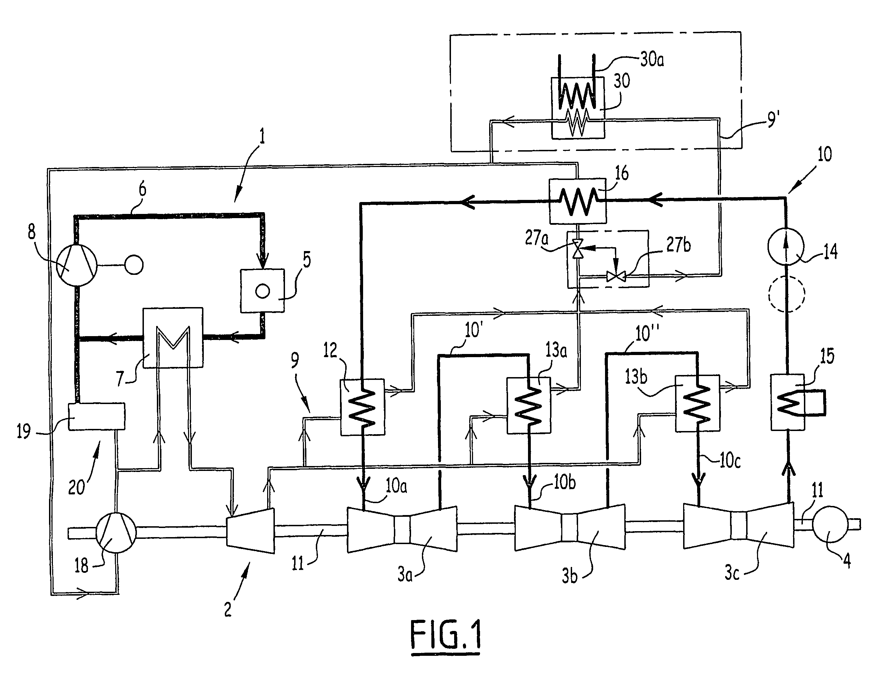

L'installation représentée sur la figure 1 comporte principalement un réacteur nucléaire à haute température désigné de manière générale par le repère 1, une turbine à gaz 2, trois turbines à vapeur 3a, 3b, 3c et une génératrice électrique 4 constituée par un alternateur dont le rotor est monté sur un arbre d'entraînement 11 commun à la turbine à gaz 2 et aux trois étages de turbines à vapeur 3a, 3b et 3c.

Le réacteur nucléaire 1 comporte un coeur 5 produisant de la chaleur dont la température en fonctionnement peut être de l'ordre de 850°C, cette température pouvant être sensiblement supérieure et par exemple de l'ordre de 950°C dans le cas de certains types de réacteur nucléaire à haute température.

Le réacteur nucléaire 1 comporte de plus un circuit primaire 6 qui est un circuit fermé dans lequel circule de l'hélium caloporteur. Sur le circuit primaire 6 du réacteur nucléaire 1 est placé un échangeur intermédiaire 7 permettant d'échauffer un gaz d'échange thermique secondaire et de refroidir l'hélium circulant dans le circuit primaire et constituant le caloporteur du réacteur nucléaire.

Sur le circuit primaire 6 du réacteur nucléaire est également placée une pompe 8 destinée à assurer la circulation de l'hélium dans le circuit primaire et une légère compression de l'hélium qui est introduit dans le coeur 5 du réacteur nucléaire à une pression de l'ordre de 70 bars. L'hélium constituant le fluide caloporteur du réacteur nucléaire ne subit qu'une faible perte de pression à la traversée de l'échangeur intermédiaire 7, de sorte qu'on peut utiliser une pompe de circulation d'hélium n'assurant qu'une faible élévation de pression au refoulement. Une telle pompe correspond à une technologie courante.

L'échangeur intermédiaire 7 assure un échange de chaleur entre le fluide primaire constitué par l'hélium sortant du coeur du réacteur 5 à une température voisine de 850°C qui est la température du coeur et un gaz d'échange thermique secondaire mis en circulation dans un circuit secondaire désigné de manière générale par le repère 9.

Selon l'invention, le gaz d'échange thermique secondaire circulant dans le circuit 9 est constitué principalement par un mélange d'hélium et d'azote ou encore un mélange d'hélium et d'air. Toutefois, il est préférable d'utiliser un mélange ne renfermant pratiquement que de l'hélium et de l'azote, de manière à supprimer ou à limiter des phénomènes d'oxydation dans le circuit secondaire. L'échangeur intermédiaire présente des caractéristiques adaptées à l'échange thermique entre le premier et le second gaz d'échange, dans les conditions de température et de pression résultant du fonctionnement de l'installation.

De manière générale, le second gaz d'échange constituant le fluide secondaire de l'installation renferme en volume substantiellement de 50 % à 70 % d'hélium et de 50 % à 30 % d'azote.

Le circuit secondaire dans lequel circule le mélange d'hélium et d'azote est un circuit totalement fermé, le second gaz d'échange étant réintroduit dans l'échangeur intermédiaire pour être échauffé par le premier gaz d'échange constitué par l'hélium caloporteur du réacteur nucléaire, après avoir assuré l'entraînement de la turbine à gaz 2 et l'échauffement et la vaporisation de fluide tel que l'eau circulant dans un circuit tertiaire 10, ainsi que d'autres fonctions de chauffage qui seront décrites plus loin.

De manière typique, le mélange d'hélium et d'azote du second gaz d'échange est introduit dans l'échangeur intermédiaire à une température de 300°C pour être chauffé jusqu'à une température de l'ordre de 800°C par le premier gaz d'échange constitué par l'hélium caloporteur qui entre à une température de l'ordre de 850°C dans l'échangeur intermédiaire 7 et sort de l'échangeur intermédiaire à une température de l'ordre de 350°C.

L'échangeur intermédiaire 7 fonctionne, comme il sera expliqué plus loin, pratiquement en équipression, le premier gaz d'échange et le second gaz d'échange étant à une même pression qui peut être, par exemple, voisine de 70 bars à l'entrée et à la sortie de l'échangeur intermédiaire 7.

Le second gaz d'échange à une température de l'ordre de 800°C et à une pression de l'ordre de 70 bars à la sortie de l'échangeur intermédiaire est envoyé à l'entrée de la turbine à gaz 2 dont le second gaz d'échange ou gaz secondaire assure l'entraînement en rotation. La partie tournante de la turbine à gaz 2 est fixée préférentiellement sur l'arbre tournant 11 commun à la turbine à gaz 2 et à trois turbines à vapeur 3a, 3b, 3c qui sont ainsi couplées au rotor de l'alternateur 4. On peut également envisager de fixer la partie tournante de la turbine à gaz sur un premier arbre d'entraînement d'un alternateur et les turbines à vapeur (généralement deux ou trois turbines) sur un second arbre d'entraînement d'un alternateur.

A la sortie de la turbine à gaz 2, le second gaz d'échange thermique présente une température de l'ordre de 600°C et une pression maximale de 50 bars, la pression pouvant être de préférence de l'ordre de 20 à 30 bars.

Afin de faciliter la compréhension de la figure 1, le circuit primaire 6, dans lequel circule de l'hélium qui est le fluide caloporteur du réacteur nucléaire 5, a été représenté en trait plein, les conduits du circuit secondaire 9 dans lequel circule le mélange d'hélium et d'azote par un double trait et le circuit tertiaire 10, dans lequel circulent de l'eau et de la vapeur constituant le fluide tertiaire de l'installation, sous la forme d'un trait plein d'une épaisseur inférieure au trait plein utilisé pour la représentation du circuit primaire 6.

A la sortie de la turbine à gaz 2, le second fluide d'échange dont la température est voisine de 600°C est récupéré par une canalisation du circuit secondaire 9 pour parvenir au générateur de vapeur 12 et aux échangeurs de chaleur réchauffeurs 13a et 13b intercalés sur des parties du circuit tertiaire 10 de l'installation dans lequel circule de l'eau et de la vapeur.

La canalisation du circuit secondaire 9 reliée à la sortie de la turbine à gaz 2 présente un embranchement relié à une partie primaire du générateur de vapeur 12 dont la partie secondaire schématisée sous la forme d'un serpentin est alimentée en eau à échauffer et à vaporiser. Une seconde branche de la canalisation de sortie de la turbine est reliée par un second et un troisième embranchements respectifs à des échangeurs de chaleur réchauffeurs respectifs 13a et 13b.

Les embranchements de la canalisation reliée à la sortie de la turbine à gaz 2 sont réalisés de manière que la partie primaire du générateur de vapeur 12 reçoive jusqu'à 80 % en volume du second gaz d'échange thermique et les échangeurs de chaleur 13a et 13b, 20 % en volume du second gaz d'échange thermique.

De préférence, dans le cas (représenté sur la figure) d'une installation comportant trois étages de turbines à vapeur, le premier étage reçoit 74 % environ du gaz d'échange et les deux étages suivants, chacun 13 %, en volume. Dans le cas d'une installation qui ne comporte que deux étages de turbines à vapeur, le premier étage peut recevoir, de préférence, 70 % en volume du second gaz d'échange et le second étage 30 % en volume.

Une première partie de la chaleur du second gaz d'échange récupérée à la sortie de la turbine à gaz est ainsi utilisée dans le circuit tertiaire pour produire de la vapeur et entraîner des turbines à vapeur.

Le circuit tertiaire 10 comporte une partie principale reliée, d'une part, à l'entrée de la partie secondaire du générateur de vapeur 12 et, d'autre part, à la sortie d'un condenseur 15 lui-même relié à la sortie de la turbine à basse pression 3c pour assurer la condensation de la vapeur humide parvenant à la sortie de la turbine 3c. Au moins une pompe 14 assure la circulation d'eau dans la partie principale du circuit tertiaire d'eau et de vapeur 10 de manière que l'eau prélevée dans le condenseur 15 et provenant de la condensation de la vapeur de la turbine 3c soit envoyée à l'entrée de la partie secondaire du générateur de vapeur 12.

On réalise, à l'intérieur du générateur de vapeur 12, un échange de chaleur entre le second gaz d'échange à une température pouvant varier entre 550 et 700°C du circuit secondaire 9, parvenant à l'entrée de la partie primaire du générateur de vapeur, avec l'eau d'alimentation de la partie secondaire de manière qu'à la sortie du générateur de vapeur on obtienne une vapeur sèche à une température de 500°C à 600°C. La vapeur sèche est envoyée par une canalisation 10a dans la partie d'entrée de la turbine à vapeur à haute pression 3a.

On récupère à la sortie de la turbine à haute pression 3a, par une première conduite intermédiaire 10' du circuit tertiaire 10, de la vapeur humide qui est envoyée à l'entrée de l'échangeur de chaleur réchauffeur 13a qui reçoit un débit de second gaz d'échange à une température de 600°C. On réalise ainsi une surchauffe et un séchage de la vapeur humide pour obtenir une vapeur sèche à une température entre 500°C et 600°C et par exemple entre 520°C et 580°C.

La vapeur sèche récupérée à la sortie de l'échangeur de chaleur réchauffeur 13a est envoyée par une canalisation 10b dans la partie d'entrée de la turbine 3b à moyenne pression, de manière à assurer l'entraînement de la turbine. On récupère, à la sortie de la turbine à moyenne pression 3b, par une seconde conduite intermédiaire 10" du circuit tertiaire 10, une vapeur humide dont on assure la surchauffe et le séchage dans un échangeur de chaleur réchauffeur 13b, par échange de chaleur avec le second gaz d'échange du circuit secondaire 9 à une température de 550 à 700°C.

On obtient, en sortie de l'échangeur surchauffeur 13b, une vapeur sèche à une température de 500°C à 600°C et par exemple entre 520°C et 580°C qui est envoyée par une troisième canalisation d'alimentation en vapeur sèche 10c, à la partie d'entrée de la turbine à vapeur à basse pression 3c pour assurer son entraînement.

Comme indiqué plus haut, la vapeur est récupérée à la sortie de la turbine à vapeur basse pression 3c pour être envoyée au condenseur par une canalisation de la partie principale du circuit tertiaire 10 d'eau et de vapeur.

La vapeur et l'eau récupérées à la sortie de la turbine 3c à une température de l'ordre de 30°C à 35°C et à basse pression est condensée dans le condenseur sous la forme d'eau à une température de 25°C à 30°C qui est récupérée par la partie principale du circuit tertiaire 10 sur lequel est placé un échangeur de chaleur à contre-courant 16 dont la partie primaire reçoit en entrée le second gaz d'échange thermique circulant dans le circuit secondaire 9 prélevé à la sortie du générateur de vapeur 12 et des échangeurs réchauffeurs 13a et 13b par des canalisations du circuit secondaire qui sont raccordées à une canalisation commune d'alimentation de l'entrée de la partie primaire de l'échangeur de chaleur 16.

Le second gaz d'échange du circuit secondaire parvenant à l'entrée de la partie primaire de l'échangeur de chaleur 16 qui est par exemple du type à courants croisés ou à contre-courant est constitué par un mélange de gaz du circuit secondaire provenant, respectivement, du générateur de vapeur 12 et des échangeurs de chaleur 13a et 13b dont la température va de 160°C à 300°C.

Par échange de chaleur avec le gaz secondaire envoyé à l'entrée de l'échangeur de chaleur 16, l'eau à une température voisine de 30°C dont la pression peut être élevée à un niveau important par la pompe 14 parvenant dans la partie secondaire de l'échangeur 16 est échauffée jusqu'à une température de l'ordre de 200°C à 250°C.

L'eau réchauffée et portée en pression qui peut être à l'état supercritique est envoyée à l'entrée de la partie secondaire du générateur de vapeur 12 pour être vaporisée et surchauffée. Le circuit tertiaire dans lequel sont disposés le générateur de vapeur 12, les turbines à vapeur 3a, 3b et 3c et les échangeurs de chaleur réchauffeurs 13a, 13b fonctionne ainsi en circuit fermé.

Le second gaz d'échange thermique du circuit secondaire 9 qui est récupéré à la sortie de l'échangeur de chaleur à contre-courant 16 est renvoyé par une canalisation du circuit secondaire, dans la partie secondaire de l'échangeur de chaleur intermédiaire 7, après passage par un compresseur 18 placé sur la conduite de retour du circuit secondaire vers l'échangeur de chaleur intermédiaire 7. Le compresseur 18 permet d'élever la pression du fluide d'échange du circuit secondaire jusqu'à un niveau sensiblement égal au niveau de pression dans le circuit primaire 1, c'est-à-dire jusqu'à environ 70 bars.

Du fait de la pression du fluide secondaire d'échange récupéré à la sortie de l'échangeur de chaleur 16, il suffit d'utiliser un compresseur ayant un taux de compression de 1,5 à 3.

Le compresseur 18 comporte une partie tournante qui peut être montée sur l'arbre 11 commun à la turbine à gaz 2, aux turbines à vapeur 3a, 3b et 3c et au rotor de l'alternateur 4.

La turbine à gaz 2 et les turbines à vapeur 3a, 3b et 3c qui sont toutes montées sur l'arbre 11 (ou éventuellement sur un premier et un second arbre, comme décrit plus haut) n'assurent donc que l'entraînement du compresseur 18, en plus de l'entraînement du rotor de l'alternateur 4. L'énergie prélevée par le compresseur 18 pour assurer la compression du fluide secondaire d'échange avec un taux de compression de 1,5 à 3 représente une faible proportion de l'énergie fournie par la turbine à gaz et les turbines à vapeur, de sorte que l'énergie reçue par l'alternateur 4 n'est que peu inférieure à l'énergie totale fournie par l'installation.

Le second gaz d'échange thermique du circuit secondaire est de plus échauffé par le compresseur jusqu'à une température de l'ordre de 300°C avant son entrée dans l'échangeur intermédiaire 7. Comme expliqué plus haut, à l'intérieur de l'échangeur intermédiaire 7, le second gaz d'échange constitué par un mélange d'hélium et d'azote est échauffé jusqu'à une température de l'ordre de 800°C, la pression du gaz secondaire d'échange étant de l'ordre de 70 bars.

Il est particulièrement avantageux de réaliser l'échangeur de chaleur intermédiaire 7 sous la forme d'un échangeur à plaques à contre-courant. Un tel échangeur à plaques peut être réalisé de manière à présenter un très bon coefficient d'échange du fait que le premier gaz d'échange thermique est constitué d'hélium et que le deuxième gaz d'échange thermique renferme de fortes proportions d'hélium. Le coefficient d'échange de ces gaz est très favorable. On obtient donc un très bon rendement de l'échangeur à plaques.

De préférence, l'échangeur à plaques est réalisé sous forme modulaire et comporte une pluralité d'unités placées en parallèle destinées à recevoir chacune un débit élémentaire de fluide primaire et de fluide secondaire.

Un des inconvénients d'un échangeur à plaques est qu'il ne supporte que de faibles différences de pression entre le fluide primaire et le fluide secondaire. Dans le cas de l'utilisation d'un échangeur à plaques comme échangeur intermédiaire 7, la pression du fluide primaire à l'entrée et à la sortie de l'échangeur de chaleur, de même que la pression du fluide secondaire à l'entrée et à la sortie de l'échangeur de chaleur sont sensiblement égales entre elles, ces pressions étant par exemple l'une et l'autre voisines de 70 bars.

Toutefois, dans certaines phases de fonctionnement transitoires de l'installation, ou dans le cas d'un incident ou d'un accident, par exemple, une rupture de canalisation, il peut apparaître une différence de pression entre le circuit primaire en hélium et le circuit secondaire dans lequel circule le mélange hélium-azote.

Pour équilibrer les pressions dans la partie primaire et dans la partie secondaire de l'échangeur à plaques 7, lors de phases transitoires, on utilise une vanne d'équilibrage de pression 20 dont la chambre, à l'intérieur du corps de vanne 19, comporte deux parties séparées par des pistons dont l'une est reliée au circuit primaire et dont l'autre est reliée au circuit secondaire, au niveau de la canalisation d'arrivée de fluide secondaire dans l'échangeur intermédiaire.

Comme il est visible sur la figure 1, on peut prévoir une conduite 9' du circuit secondaire 9, en dérivation entre la conduite de retour de fluide secondaire vers l'échangeur intermédiaire et la conduite d'introduction de fluide secondaire dans l'échangeur de chaleur à contre-courant 16. Des vannes de réglage 27a et 27b sont placées sur la conduite en dérivation et sur la conduite d'introduction de fluide dans l'échangeur de chaleur à contre-courant 16, de manière à régler le débit passant dans la branche en dérivation 9' sur laquelle est placé un échangeur de chaleur 30 à température modérée dont la partie primaire reçoit le fluide secondaire prélevé par la conduite en dérivation 9'. Ce fluide secondaire est à une température de l'ordre de 200°C, ce qui permet d'élever la température d'un fluide tel que de l'eau circulant dans la partie secondaire 30a de l'échangeur de chaleur 30 à une température voisine de 200°C. On utilise ainsi une seconde partie de la chaleur contenue dans le second fluide d'échange dont une première partie est utilisée à la sortie de la turbine à gaz dans le circuit tertiaire en eau et vapeur. L'échangeur de chaleur 30 peut être un échangeur à plaques.

L'eau à 200°C sous pression obtenue dans le circuit secondaire 30a de l'échangeur de chaleur 30 peut être utilisée par exemple pour alimenter un circuit de chauffage urbain ou pour fournir de la chaleur d'évaporation à une usine de dessalement d'eau de mer.

De ce fait, on utilise une partie de la chaleur résiduelle du fluide secondaire avant son retour à l'échangeur intermédiaire, par l'intermédiaire du compresseur 18. A l'entrée du compresseur 18, le fluide secondaire est à une température faible ; le compresseur assure une élévation de la température du fluide secondaire jusqu'à une température d'entrée dans l'échangeur de chaleur intermédiaire de l'ordre de 300°C.

Dans certains cas, on doit disposer d'un fluide à très haute température pour des besoins tels que la production d'hydrogène. On peut obtenir un tel fluide à très haute température en prélevant une partie du fluide secondaire à la sortie de l'échangeur de chaleur intermédiaire.

Pour augmenter le rendement de l'installation de production d'électricité, il est possible d'utiliser plusieurs turbines à gaz placées en série, de manière que chaque turbine située à la suite d'une turbine précédente reçoive le gaz provenant de la sortie de la turbine précédente, après réchauffage du gaz dans une partie de l'échangeur intermédiaire. Les parties tournantes des turbines successives peuvent être reliées à un même arbre d'entraînement d'une génératrice électrique. Le gaz utilisé à l'entrée de chacune des turbines à gaz successives présente donc une température sensiblement constante et égale par exemple à 800°C et une pression décroissante. Dans le cas d'un échangeur à plaques réalisé sous forme modulaire, on peut utiliser des modules ou ensembles de modules successifs pour réaliser le réchauffage des différentes fractions de gaz récupérées à la sortie des turbines à gaz et réintroduites dans une turbine suivante.

En outre, pour améliorer le fonctionnement de la partie tertiaire de l'installation comportant le circuit tertiaire 10 en eau et vapeur, le générateur de vapeur, les échangeurs de chaleur et les turbines à vapeur, on peut élever la pression de l'eau d'alimentation du générateur de vapeur dans le circuit tertiaire jusqu'à une valeur telle que l'eau soit en condition supercritique.

L'échangeur de chaleur 30 assurant l'échauffement d'eau pour une fonction annexe peut être avantageusement un échangeur à plaques mais toutefois cet échangeur peut être également un échangeur à tubes.

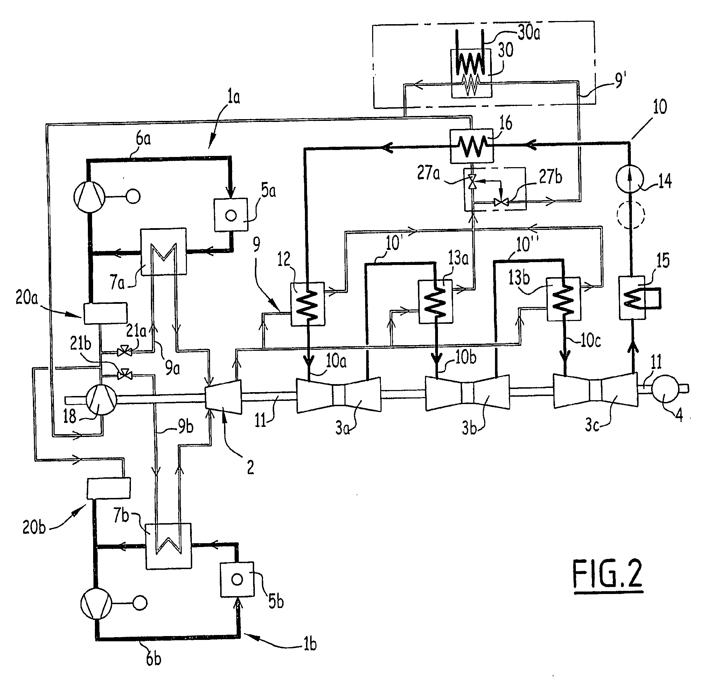

Sur la figure 2 on a représenté une installation suivant une variante de réalisation de l'invention. A part le fait que l'installation suivant la variante comporte deux réacteurs nucléaires à haute température 1a et 1b au lieu d'un seul réacteur nucléaire, elle est analogue à l'installation décrite en regard de la figure 2 et comporte un circuit secondaire 9 dans lequel circule un fluide d'échange constitué par un mélange d'hélium et d'azote, un circuit tertiaire en eau et vapeur 10, une turbine à gaz 2 et trois turbines à vapeur 3a, 3b, 3c ainsi qu'un échangeur de chaleur 30 à température modérée. De manière générale, les éléments correspondant sur la figure 1 et sur la figure 2 sont désignés par les mêmes repères.

Les deux réacteurs nucléaires 1a et 1b peuvent être réalisés avantageusement de manière analogue et présenter des puissances égales. Chacun des réacteurs nucléaires du type à haute température comporte un circuit primaire 6a ou 6b dans lequel circule, lorsque le réacteur nucléaire est en fonctionnement, de l'hélium à une haute température, par exemple de l'ordre de 850°C, constituant le gaz caloporteur du réacteur. Sur chacun des deux circuits primaires 6a et 6b est placé un échangeur de chaleur intermédiaire 7a et 7b assurant un échange de chaleur entre l'hélium constituant le premier fluide d'échange de l'installation et le second fluide d'échange circulant dans le circuit secondaire 9. Pour cela, la partie primaire des échangeurs 7a et 7b est reliée au circuit primaire 6a ou 6b correspondant et la partie secondaire des échangeurs 7a et 7b au circuit secondaire par l'intermédiaire d'un embranchement respectif 9a ou 9b, relié à une conduite du circuit secondaire en aval du compresseur 18. La partie secondaire des échangeurs intermédiaires 7a et 7b est alimentée en un second fluide d'échange refroidi et sous une pression sensiblement égale à la pression de l'hélium dans les circuits primaires 6a et 6b des réacteurs nucléaires 1a et 1b. Le second fluide d'échange thermique est maintenu à une pression sensiblement égale à la pression de l'hélium des circuits primaires par des vannes d'équilibrage de pression respectives 20a et 20b analogues à la vanne 20 de l'installation représentée sur la figure 1, reliées chacune à la conduite du circuit secondaire alimentant les échangeurs intermédiaires et au circuit primaire correspondant.

Sur chacun des embranchements d'alimentation 9a et 9b d'un échangeur de chaleur intermédiaire en fluide d'échange secondaire est placée une vanne respective 21 a et 21 b de réglage ou d'arrêt de la circulation du second fluide d'échange dans l'échangeur intermédiaire correspondant. Le second fluide d'échange échauffé dans les échangeurs intermédiaires est utilisé pour entraîner la turbine à gaz 2.

Dans le cas où le premier et le second réacteurs nucléaires 1a et 1b sont en fonctionnement simultanément, les vannes 21 a et 21 b sont en position d'ouverture et le second fluide d'échange est échauffé par les deux réacteurs. Dans le cas où l'un des réacteurs nucléaires, par exemple le second réacteur 1 b, est indisponible, par exemple en phase de rechargement d'entretien ou d'intervention pour réparation, la seconde vanne 21 b est fermée et la première vanne 21a est ouverte. L'installation reste ainsi en fonctionnement et utilise la chaleur produite par le premier réacteur 1a resté en fonctionnement.

On évite ainsi d'avoir à effectuer l'arrêt de l'installation en prévoyant des phases d'arrêt des deux réacteurs espacées dans le temps.

Comme indiqué plus haut, un avantage important du procédé et du dispositif suivant l'invention est de permettre l'utilisation d'éléments classiques dans le cas des installations de production d'énergie, telles que des installations de production d'énergie électrique, par exemple des turbines à gaz fonctionnant avec un gaz ayant des caractéristiques thermodynamiques proches de l'air, des compresseurs à faibles taux de compression et des turbines à vapeur d'un type classique.

Le procédé et le dispositif suivant l'invention présentent également l'avantage d'utiliser un fluide secondaire renfermant une forte proportion d'hélium et qui présente de très bonnes caractéristiques d'échange thermique. En particulier, le rendement du générateur de vapeur et des échangeurs de chaleur du circuit tertiaire en eau est fortement amélioré. L'utilisation de turbines à vapeur permet une utilisation optimale de la chaleur produite par le réacteur nucléaire.

L'invention ne se limite pas au mode de réalisation qui a été décrit.

L'installation peut comporter un seul réacteur nucléaire ou au moins deux réacteurs qui peuvent être en fonctionnement de manière simultanée pour fournir de la chaleur à un fluide secondaire constitué d'hélium et d'azote; un ou plusieurs réacteurs nucléaires peuvent également être arrêtés, l'installation fonctionnant alors avec le ou les réacteurs restant en service.

On peut envisager également des utilisations annexes de la chaleur produite par le ou les réacteurs nucléaires et transférée au fluide secondaire, différentes de celles qui ont été décrites.

L'invention s'applique à l'utilisation de la chaleur produite par tout réacteur nucléaire à haute température, c'est-à-dire dont le coeur fonctionne à une température au moins égale à 800°C.

## Revendications

1. Procédé de production d'électricité à partir de la chaleur produite dans le coeur (5) d'au moins un réacteur nucléaire (1) à haute température, consistant à faire circuler un premier gaz d'échange thermique ou gaz caloporteur au contact du coeur (5) du réacteur nucléaire (1), en circuit fermé, à échauffer un second gaz d'échange thermique, par échange de chaleur avec le premier gaz d'échange thermique et à utiliser le second gaz d'échange thermique échauffé par le premier gaz d'échange thermique pour entraîner au moins une turbine à gaz (2) couplée à une génératrice électrique (4), le premier gaz d'échange étant constitué par de l'hélium, le second gaz d'échange renfermant en volume substantiellement de 50 % à 70 % d'hélium et de 50 % à 30 % d'azote, le second gaz d'échange thermique étant mis en circulation en circuit fermé, de manière que le second gaz d'échange thermique échauffé par le premier gaz d'échange thermique assure l'entraînement de l'au moins une turbine à gaz (2), **caractérisé par le fait qu'**on récupère au moins une première partie de la chaleur du second gaz d'échange ayant traversé la turbine à gaz (2) pour assurer l'échauffement et la vaporisation d'eau, dans au moins un générateur de vapeur (12), de manière à produire de la vapeur pour entraîner au moins une turbine à vapeur (3a, 3b, 3c) couplée à la génératrice électrique (4).

2. Procédé suivant la revendication 1, **caractérisé par le fait qu'**on récupère au moins une seconde partie de la chaleur du second fluide d'échange pour assurer un apport de chaleur à une installation annexe (30) telle qu'un système de chauffage urbain ou une usine de dessalement d'eau de mer.

3. Procédé suivant l'une quelconque des revendications 1 et 2, **caractérisé par le fait qu'**on récupère une fraction au moins de la chaleur du second gaz d'échange thermique échauffé par le premier fluide d'échange thermique, pour assurer, préalablement à l'entraînement de la turbine à gaz (2), une fonction telle que la production d'hydrogène demandant un fluide à très haute température.

4. Procédé suivant l'une quelconque des revendications 1 à 3, **caractérisé par le fait qu'**on échauffe le second gaz d'échange thermique par échange de chaleur avec du gaz caloporteur de refroidissement d'au moins deux réacteurs nucléaires (1a, 1b) en fonctionnement de manière simultanée et avec du gaz caloporteur d'au moins un premier réacteur nucléaire (1a, 1b) parmi les au moins deux réacteurs nucléaires, lorsqu'au moins un second réacteur nucléaire (1a, 1b) est à l'arrêt.

5. Dispositif de production d'électricité à partir de la chaleur produite dans le coeur (5) d'au moins un réacteur nucléaire (1) à haute température comportant un circuit primaire (6) dans lequel circule un premier gaz d'échange thermique de refroidissement du coeur (5) du réacteur, une turbine à gaz (2) couplée à un générateur électrique (4) par l'intermédiaire d'un arbre (11), et un circuit secondaire (9) de circulation d'un second gaz d'échange thermique sur lequel est intercalée la turbine à gaz (2), le dispositif comportant de plus au moins un échangeur de chaleur intermédiaire (7) ayant une partie primaire reliée au circuit primaire (6) du réacteur nucléaire (1) et une partie secondaire reliée au circuit secondaire (9), assurant l'échauffement du second gaz d'échange à partir de la chaleur produite dans le coeur du réacteur par le premier gaz d'échange thermique, l'échangeur intermédiaire (7) et la turbine à gaz (2) ayant des caractéristiques adaptées à l'utilisation d'hélium comme premier gaz d'échange thermique et d'un mélange d'hélium et d'azote comme second gaz d'échange thermique, **caractérisé par le fait qu'**il comporte un circuit tertiaire (10) de circulation d'eau et de vapeur sur lequel est disposé au moins un générateur de vapeur (12) et au moins une turbine à vapeur (3a), et le générateur de vapeur (12) comportant une partie secondaire intercalée sur le circuit tertiaire (10) d'eau et de vapeur pour recevoir de l'eau à l'entrée et pour fournir en sortie de la vapeur à la turbine à vapeur (3a) et une partie primaire intercalée sur le circuit secondaire (9) pour recevoir du second gaz d'échange, après sa sortie de la turbine à gaz (2).

6. Dispositif suivant la revendication 5, **caractérisé par le fait que** le circuit tertiaire (10) comporte de plus un premier échangeur réchauffeur (13a) dont la partie secondaire est reliée à la sortie de la première turbine à vapeur (3a) constituant une turbine à haute pression pour recevoir une vapeur humide et dont la partie de sortie est reliée à une seconde turbine à vapeur (3b) ou turbine moyenne pression, un second échangeur réchauffeur (13b) ayant une partie secondaire reliée, par une entrée, à la sortie de la seconde turbine (3b) à moyenne pression pour recevoir une vapeur humide et, en sortie, à une partie d'entrée d'une troisième turbine à vapeur (3c) ou turbine basse pression dont la partie de sortie est reliée au circuit (10) sur lequel est placé un condenseur (15), chacun du premier et du second échangeurs de chaleur réchauffeurs (13a, 13b) ayant une partie primaire alimentée en second gaz d'échange à partir de dérivations du circuit secondaire (9), pour réchauffer et sécher la vapeur humide introduite à l'entrée de la partie secondaire de l'échangeur de chaleur réchauffeur et le circuit tertiaire (10) étant un circuit fermé permettant de renvoyer l'eau récupérée dans le condenseur (15) à l'entrée de la partie secondaire du générateur de vapeur (12).

7. Dispositif suivant la revendication 6, **caractérisé par le fait qu'**un échangeur de chaleur à contre-courant (16) est disposé sur une partie du circuit tertiaire (10) assurant un retour de l'eau condensée à l'entrée de la partie secondaire du générateur de vapeur (12), de manière qu'une partie secondaire de l'échangeur de chaleur (16) reçoive, en entrée, de l'eau provenant du condenseur (15) pour fournir, en sortie, de l'eau réchauffée au générateur de vapeur (12), et une partie primaire dans laquelle circule le second gaz d'échange thermique récupéré à la sortie de la partie primaire du générateur de vapeur (12) et des échangeurs réchauffeurs (13a, 13b).

8. Dispositif suivant l'une quelconque des revendications 5 à 7, **caractérisé par le fait que** l'échangeur de chaleur intermédiaire (7) est un échangeur à plaques.

9. Dispositif suivant la revendication 8, **caractérisé par le fait que** le circuit secondaire (9) est entièrement fermé et comporte un compresseur (18) pour recomprimer le second gaz d'échange jusqu'à une pression sensiblement égale à la pression du premier gaz d'échange thermique dans le circuit primaire (6) du réacteur nucléaire (1), avant sa réintroduction à l'entrée de la partie secondaire de l'échangeur intermédiaire (7).

10. Dispositif suivant la revendication 9, **caractérisé par le fait qu'**il comporte de plus au moins une vanne (20) d'équilibrage de pression reliée, d'une part, au circuit primaire (6) du réacteur nucléaire (1) et, d'autre part, à une conduite du circuit secondaire (9) assurant la liaison entre la sortie du compresseur (18) et l'entrée de la partie secondaire de l'au moins un échangeur de chaleur (7), de manière que la pression du premier fluide d'échange thermique dans le circuit primaire (6) du réacteur nucléaire (1) et la pression dans la partie secondaire de l'au moins un échangeur de chaleur intermédiaire (7) restent constamment sensiblement égales entre elles.

11. Dispositif suivant l'une quelconque des revendications 5 à 10, **caractérisé par le fait qu'**il comporte de plus un échangeur de chaleur à température modérée (30) ayant une partie primaire reliée au circuit secondaire (9) pour la circulation dans l'échangeur de chaleur à température modérée (30) du second fluide d'échange et une partie secondaire dans laquelle circule un liquide tel que de l'eau utilisé dans une installation annexe telle qu'un circuit de chauffage urbain ou une usine de dessalement d'eau de mer.

12. Dispositif suivant la revendication 11, **caractérisé par le fait que** l'échangeur de chaleur à température modérée (30) est disposé sur une conduite en dérivation par rapport à une partie du circuit secondaire (9) et que sur la conduite en dérivation et sur la partie du circuit secondaire sur laquelle est placée la conduite en dérivation sont disposées des vannes de réglage (27a, 27b) pour régler le débit du second fluide d'échange, dans la partie du circuit secondaire et dans la conduite en dérivation.

13. Dispositif suivant l'une quelconque des revendications 5 à 12, **caractérisé par le fait qu'**il comporte au moins deux réacteurs nucléaires (1 a, 1b) ayant chacun un circuit primaire (6a, 6b) dans lequel circule un gaz caloporteur et au moins deux échangeurs de chaleur intermédiaires (7a, 7b) ayant chacun une partie primaire disposée sur un circuit primaire respectif (6a, 6b) d'un réacteur nucléaire (1a, 1 b) pour recevoir le gaz caloporteur du réacteur nucléaire (1a, 1b) et une partie secondaire disposée sur un embranchement respectif (9a, 9b) d'un circuit secondaire pour recevoir le second fluide d'échange thermique, une vanne d'arrêt (21 a, 21 b) étant disposée sur chacun des embranchements (9a, 9b).

14. Dispositif suivant la revendication 13, **caractérisé par le fait qu'**une vanne d'équilibrage de pression (20a, 20b) est reliée à chacun des embranchements (9a, 9b) du circuit secondaire et à chacun des circuits primaires (6a, 6b) des réacteurs nucléaires pour maintenir une pression du second gaz d'échange dans la partie secondaire d'un échangeur de chaleur (7a, 7b) respectif sensiblement égale à une pression du gaz caloporteur dans la partie primaire de l'échangeur de chaleur (7a, 7b).

15. Dispositif suivant l'une quelconque des revendications 5 à 14, **caractérisé en ce que** le circuit secondaire (9) comporte un seul compresseur (18) pour comprimer le second gaz d'échange avant son passage dans l'échangeur intermédiaire (7).

16. Dispositif suivant la revendication 15, **caractérisé en ce que** le compresseur (18) présente un taux de compression compris entre 1.5 et 3.

## Claims

1. Method for producing electricity from the heat produced in the core (5) of at least one nuclear reactor (1) at high temperature, consisting in circulating a first heat exchange gas or heat transfer gas in contact with the core (5) of the nuclear reactor (1), in a closed circuit, in heating a second heat exchange gas, by heat exchange with the first heat exchange gas, and in using the second heat exchange gas heated by the first heat exchange gas to drive at least one gas turbine (2) coupled with an electric generator (4), the first heat exchange gas consisting of helium, the second heat exchange gas containing a volume substantially of 50% to 70% of helium and 50% to 30% of nitrogen, the second heat exchange gas being circulated in a closed circuit, so that the second heat exchange gas heated by the first heat exchange gas drives the at least one gas turbine (2), **characterized in that** at least a first part of the heat is recovered from the second heat exchange gas having passed through the gas turbine (2) to heat and vaporize water, in at least one steam generator (12), in order to produce steam to drive at least one steam turbine (3a, 3b, 3c) coupled with the electric generator (4).

2. Method according to Claim 1, **characterized in that** at least a second part of the heat is recovered from the second heat exchange fluid to send heat to an ancillary installation (30) such as a district heating system or a seawater desalination plant.

3. Method according to either of Claims 1 and 2, **characterized in that** at least one fraction of the heat is recovered from the second heat exchange gas heated by the first heat exchange fluid, to carry out, prior to driving the gas turbine (2), a function such as the production of hydrogen requiring a fluid at very high temperature.

4. Method according to any one of Claims 1 to 3, **characterized in that** the second heat exchange gas is heated by heat exchange with the heat transfer gas for cooling at least two nuclear reactors (1a, 1b) in operation simultaneously and with the heat transfer gas of at least a first nuclear reactor (1a, 1b) of the at least two nuclear reactors, when at least one second nuclear reactor (1a, 1b) is shut down.

5. Device for producing electricity from the heat produced in the core (5) of at least one nuclear reactor (1) at high temperature comprising a primary circuit (6) conveying a first heat exchange gas for cooling the core (5) of the reactor, a gas turbine (2) coupled with an electric generator (4) via a shaft (11), and a secondary circuit (9) conveying a second heat exchange gas wherein the gas turbine (2) is inserted, the device further comprising at least one intermediate heat exchanger (7) having a primary part connected to the primary circuit (6) of the nuclear reactor (1) and a secondary part connected to the secondary circuit (9), heating the second heat exchange gas from the heat produced in the core of the reactor by the first heat exchange gas, the intermediate heat exchanger (7) and the gas turbine (2) having characteristics suitable for the use of helium as a first heat exchange gas and a mixture of helium and nitrogen as the second heat exchange gas, **characterized in that** it comprises a tertiary circuit. (10) for circulating water and steam on which at least one steam generator (12) and at least one steam turbine (3a) are placed, and the steam generator (12) comprising a secondary part inserted into the tertiary water and steam circuit (10) to receive water at the inlet and to supply steam at the outlet for the steam turbine (3a) and a primary part inserted into the secondary circuit (9) to receive the second heat exchange gas, after it exits from the gas turbine (2) .

6. Device according to Claim 5, **characterized in that** the tertiary circuit (10) further comprises a first heating heat exchanger (13a) whereof the secondary part is connected to the outlet of the first steam turbine (3a), constituting a high pressure turbine for receiving a wet steam and whereof the outlet part is connected to a second steam turbine (3b) or medium pressure turbine, a second heating heat exchanger (13b) having a secondary part connected, via an inlet, to the outlet of the second turbine (3b) at medium pressure to receive a wet steam and, at the outlet, to an inlet part of a third steam turbine (3c) or low pressure turbine whereof the outlet part is connected to the circuit (10) on which a condenser (15) is placed, each of the first and second heating heat exchangers (13a, 13b) having a primary part supplied with a second heat exchange gas via bypasses of the secondary circuit (9), to heat and dry the wet steam introduced at the inlet of the secondary part of the heating heat exchanger and the tertiary circuit (10) being a closed circuit for sending the water recovered in the condenser (15) to the inlet of the secondary part of the steam generator (12).

7. Device according to Claim 6, **characterized in that** a countercurrent heat exchanger (16) is placed on part of the tertiary circuit (10) for recycling condensed water to the inlet of the secondary part of the steam generator (12), so that a secondary part or the heat exchanger (16) receives, at the inlet, water issuing from the condenser (15) to supply, at the outlet, heated water to the steam generator (12), and a primary part conveying the second heat exchange gas recovered at the outlet of the primary part of the steam generator (12) and the heating heat exchangers (13a, 13b).

8. Device according to any one of Claims 5 to 7, **characterized in that** the intermediate heat exchanger (7) is a plate-type heat exchanger.

9. Device according to Claim 8, **characterized in that** the secondary circuit (9) is completely closed and comprises a compressor (18) for recompressing the second heat exchange gas to a pressure substantially equal to the pressure of the first heat exchange gas in the primary circuit (6) of the nuclear reactor (1), before its reintroduction at the inlet of the secondary part of the intermediate heat exchanger (7).

10. Device according to Claim 9, **characterized in that** it further comprises at least one pressure balancing valve (20) connected, on the one hand, to the primary circuit (6) of the nuclear reactor (1) and, on the other, to a line of the secondary circuit (9) providing the connection between the outlet of the compressor (18) and the inlet of the secondary part of the at least one heat exchanger (7), so that the pressure of the first heat exchange fluid in the primary circuit (6) of the nuclear reactor (1) and the pressure in the secondary part of the at least one intermediate heat exchanger (7) remain constantly substantially equal to one another.

11. Device according to any one of Claims 5 to 10, **characterized in that** it further comprises a moderate temperature heat exchanger (30) having a primary part connected to the secondary circuit (9) for circulating the second heat exchange fluid in the moderate temperature heat exchanger (30) and a secondary part conveying a liquid such as water used in an ancillary installation such as a district heating circuit or a seawater desalination plant.

12. Device according to Claim 11, **characterized in that** the moderate temperature heat exchanger (30) is placed on a branch line with regard to a part of the secondary circuit (9) and that, on the branch line and on the part of the secondary circuit whereon the branch line is placed, regulating valves (27a, 27b) are placed for regulating the flow rate of the second heat exchange fluid, in the part of the secondary circuit and in the branch line.

13. Device according to any one of Claims 5 to 12, **characterized in that** it comprises at least two nuclear reactors (1a, 1b) each having a primary circuit (6a, 6b) conveying a heat transfer gas and at least two intermediate heat exchangers (7a, 7b) each having a primary part placed on a respective primary circuit (6a, 6b) of a nuclear reactor (1a, 1b) to receive the heat transfer gas from the nuclear reactor (1a, 1b) and a secondary part placed on a respective branch (9a, 9b) of a secondary circuit to receive the second heat exchange fluid, a shutoff valve (21a, 21b) being placed on each of the branches (9a, 9b).

14. Device according to Claim 13, **characterized in that** a pressure balancing valve (20a, 20b) is connected to each of the branches (9a, 9b) of the secondary circuit and to each of the primary circuits (6a, 6b) of the nuclear reactors to maintain a pressure of the second heat exchange gas in the secondary part of a respective heat exchanger (7a, 7b) substantially equal to a pressure of the heat transfer gas in the primary part of the heat exchanger (7a, 7b).

15. Device according to any one of Claims 5 to 14, **characterized in that** the secondary circuit (9) comprises a single compressor (18) for compressing the second heat exchange gas before its passage into the intermediate heat exchanger (7).

16. Device according to Claim 15, **characterized in that** the compressor (18) has a compression ratio of between 1.5 and 3,

## Patentansprüche

1. Verfahren zur Erzeugung von elektrischem Strom aus der im Kern (5) mindestens eines Hochtemperatur-Kernreaktors (1) erzeugten Wärme, darin bestehend, dass man ein erstes Wärmeaustauschgas oder Wärmeübertragungs- bzw. Wärmeabführungsgas in einem geschlossenen Kreislauf den Kern (5) des Kernreaktors (1) mit Kontakt umströmen lässt, man ein zweites Wärmeaustauschgas durch Wärmeaustausch mit dem ersten Wärmeaustauschgas erhitzt und man das durch das erste Wärmeaustauschgas erhitzte zweite Wärmeaustauschgas benützt, um mindestens eine Gasturbine (2) anzutreiben, die mit einem Stromgenerator (4) gekoppelt ist, wobei das erste Wärmeaustauschgas durch Helium gebildet wird, das zweite Wärmeaustauschgas volumenmäßig substantiell 50% bis 70% Helium und 50% bis 30% Stickstoff enthält, und das zweite Wärmeaustauschgas dabei so in einem geschlossenen Kreislauf zirkuliert, dass das durch das erste Wärmeaustauschgas erhitzte zweite Wärmeaustauschgas den Antrieb von mindestens einer Gasturbine (2) leistet, **dadurch gekennzeichnet, dass** man wenigstens einen ersten Teil der Wärme des zweiten Wärmeaustauschgases, nachdem es die Gasturbine (2) durchquert hat, zurückgewinnt für die Erhitzung und Verdampfung von Wasser in mindestens einem Dampfgenerator (12), um Dampf für den Antrieb mindestens einer mit dem Stromgenerator (4) gekoppelten Dampfturbine (3a, 3b, 3c) zu erzeugen.

2. Verfahren nach Anspruch 1, **dadurch gekennzeichnet, dass** man wenigstens einen zweiten Teil der Wärme des zweiten Wärmeaustauschfluids zurückgewinnt, um ihn einer Nebenanlage (30) zuzuführen, etwa einem städtischen Heizwerk oder einer Meerwasserentsalzungsfabrik.

3. Verfahren nach einem der Ansprüche 1 und 2, **dadurch gekennzeichnet, dass** man wenigstens einen Bruchteil des durch das erste Wärmeaustauschfluid erhitzten zweiten Wärmeaustauschgases zurückgewinnt, um - vor dem Antreiben der Gasturbine (2) - eine Funktion wie die Erzeugung von Wasserstoff zu realisieren, die ein Fluid mit einer sehr hohen Temperatur verlangt.

4. Verfahren nach einem der Ansprüche 1 bis 3, **dadurch gekennzeichnet, dass** man das zweite Wärmeaustauschgas durch Wärmeaustausch mit Wärmeabführungs-Kühlgas von mindestens zwei Kernreaktoren (1a, 1b) im Simultanbetrieb und mit Wärmeabführungsgas von wenigstens einem ersten Kernreaktor (1a, 1b) der mindestens zwei Kernreaktoren erhitzt, wenn sich mindestens ein zweiter Kernreaktor (1a, 1 b) im Stillstand befindet.

5. Vorrichtung zur Erzeugung von elektrischem Strom aus der im Kern (5) mindestens eines Hochtemperatur-Kernreaktors (1) erzeugten Wärme, mit einem Primärkreis (6), in dem ein erstes Wärmeaustausch-Kühlgas des Reaktorkerns (5) zirkuliert, einer mittels einer Welle (11) mit einem Stromgenerator (4) gekoppelten Gasturbine (2), und einem Sekundärkreis (9), in dem ein zweites Wärmeaustauschgas zirkuliert und in den die Gasturbine (2) eingebaut ist, wobei die Vorrichtung zudem mindestens einen Zwischenwärmetauscher (7) mit einem in den Primärkreis (6) des Kernreaktors (1) eingebauten Primärteil und einem in den Sekundärkreis (9) eingebauten Sekundärteil umfasst, zur Erhitzung des zweiten Austauschgases durch das erste Wärmeaustauschgas mit der in dem Reaktorkern erzeugten Wärme, wobei der Zwischentauscher (7) und die Gasturbine (2) Kennwerte aufweisen, die angepasst sind an die Verwendung von Helium als erstem Wärmeaustauschgas und einem Helium- und Stickstoffgemisch als zweitem Wärmeaustauschgas,
**dadurch gekennzeichnet, dass** sie einen Wasser- und Dampfzirkulations-Tertiärkreis (10) umfasst, in den mindestens ein Dampfgenerator (12) und mindestens eine Dampfturbine (3a) eingebaut sind, und der Dampfgenerator (12) einen Sekundärteil, der in den Wasser- und Dampf-Tertiärkreis (10) eingebaut ist und der am Eingang Wasser aufnimmt und am Ausgang der Dampfturbine (3a) Dampf liefert, sowie einen in den Sekundärkreis (9) eingebauten Primärteil umfasst, der das zweite Austauschgas aufnimmt, nachdem es aus der Gasturbine (2) ausgetreten ist.

6. Vorrichtung nach Anspruch 5, **dadurch gekennzeichnet, dass** der Tertiärkreis (10) zudem einen ersten Vorwärmer-Wärmetauscher (13a), dessen Sekundärteil mit dem Ausgang der ersten Dampfturbine (3a) verbunden ist, die eine mit Nassdampf gespeiste Hochdruckturbine ist und deren Ausgangsteil mit einer zweiten Dampfturbine oder Mitteldruckturbine (3b) verbunden ist, sowie einen zweiten Vorwärmer-Wärmetauscher (13b) umfasst, dessen Sekundärteil durch einen Eingang mit dem Ausgang der zweiten Turbine oder Mitteldruckturbine (3b) verbunden ist, um mit Nassdampf gespeist zu werden, und am Ausgang mit einem Eingangsteil einer dritten Dampfturbine oder Niederdruckturbine (3c) verbunden ist, deren Ausgangsteil mit dem Kreis (10) verbunden ist, in den ein Kondensator (15) eingebaut ist, wobei sowohl der erste als auch der zweite Vorwärmer-Wärmetauscher (13a, 13b) einen Primärteil aufweist, der durch Abzweigungen des Sekundärkreises (9) mit dem zweiten Wärmeaustauschgas gespeist wird, um den Nassdampf vorzuwärmen und zu trocknen, der in den Eingang des Sekundärteils des Vorwärmer-Wärmetauschers eingespeist wird, und der Tertiärkreis (10) ein geschlossener Kreis ist, der ermöglicht, das in dem Kondensator (15) zurückgewonnene Wasser zum Eingang des Sekundärteils des Dampfgenerators (12) zurückzuleiten.

7. Vorrichtung nach Anspruch 6, **dadurch gekennzeichnet, dass** ein Gegenstromwärmetauscher (16) in einen Teil des Tertiärkreises (10) eingebaut ist, der eine Rückkehr des kondensierten Wassers zum Eingang des Sekundärteils des Dampfgenerators (12) gewährleistet, so dass ein Sekundärteil des Wärmetauschers (16) am Eingang Wasser erhält, das von dem Kondensator (15) stammt, um am Ausgang dem Dampfgenerator (12) vorgewärmtes Wasser zu liefern, und ein Primärteil, in dem das zweite Wärmeaustauschgas zirkuliert, zurückgewonnen am Ausgang des Primärteils des Dampfgenerators (12) und der Vorwärmer-Wärmetauscher (13a, 13b).

8. Vorrichtung nach einem der Ansprüche 5 bis 7, **dadurch gekennzeichnet, dass** der Zwischenwärmetauscher (7) ein Plattenwärmetauscher ist.

9. Vorrichtung nach Anspruch 8, **dadurch gekennzeichnet, dass** der Sekundärkreis (9) ganz geschlossen ist und einen Verdichter (18) umfasst, um das zweite Wärmeaustauschgas wieder auf einen Druck zu verdichten, der im wesentlichen gleich dem Druck des ersten Wärmeaustauschgases in dem Primärkreis (6) des Kernreaktors (1) ist - vor seiner Wiedereinspeisung in den Eingang des Sekundärteils des Zwischentauschers (7).

10. Vorrichtung nach Anspruch 9, **dadurch gekennzeichnet, dass** sie zudem mindestens ein Druckausgleichventil (20) umfasst, einerseits mit dem Primärkreis (6) des Kernreaktors (1) und andererseits mit einer Leitung des Sekundärkreises (9) verbunden, welche die Verbindung zwischen dem Ausgang des Verdichters (18) und dem Eingang des Sekundärteils von mindestens einem Wärmetauscher (7) gewährleistet, so dass der Druck des ersten Wärmeaustauschfluids in dem Primärkreis (6) des Kernreaktors (1) und der Druck in dem Sekundärteil von mindestens einem Zwischentauscher (7) im wesentlichen gleich sind.

11. Vorrichtung nach einem der Ansprüche 5 bis 10, **dadurch gekennzeichnet, dass** sie zudem einen Moderattemperatur-Wärmetauscher (30) umfasst, der einen mit dem Sekundärkreis verbundenen Primärteil für die Zirkulation des zweiten Wärmeaustauschfluids sowie einen Sekundärteil umfasst, in dem eine Flüssigkeit wie etwa Wasser fließt, die in einer Nebenanlage wie etwa einem städtischen Heizwerk oder einer Meerwasserentsalzungsfabrik benutzt wird.

12. Vorrichtung nach Anspruch 11, **dadurch gekennzeichnet, dass** der Moderattemperatur-Wärmetauscher (30) in eine Abzweigung bzw. einen Bypass eines Teils des Sekundärkreises (9) eingebaut ist, und dass in der Abzweigungs- bzw. Bypassleitung und in dem Teil des Sekundärkreises, den die Bypassleitung umgeht, Regelventile (27a, 27b) eingebaut sind, um den Durchsatz des zweiten Wärmeaustauschfluids in dem Teil des Sekundärkreises und in der Bypassleitung zu regeln.

13. Vorrichtung nach einem der Ansprüche 5 bis 12, **dadurch gekennzeichnet, dass** sie mindestens zwei Kernreaktoren (1a, 1 b) enthält, von denen jeder einen Primärkreis (6a, 6b), in dem ein Wärmeabführungsgas zirkuliert, und wenigstens zwei Zwischenwärmetauscher (7a, 7b) umfasst, von denen jeder einen Primärteil hat, jeweils eingebaut in einen Primärkreis (6a, 6b) eines Kernreaktors (1 a, 1 b), um das Wärmeabführungsgas des Kernreaktors (1 a, 1 b) zu erhalten, sowie einen Sekundärkreis, eingebaut in jeweils eine Abzweigung (9a, 9b) eines Sekundärkreises, um das zweite Wärmeaustauschfluid zu erhalten, wobei in jede der Abzweigungen (9a, 9b) ein Sperrventil (21 a, 21 b) eingebaut ist.

14. Vorrichtung nach Anspruch 13, **dadurch gekennzeichnet, dass** ein Druckausgleichsventil (20a, 20b) mit jeder der Abzweigungen (9a, 9b) des Sekundärkreises und mit jedem der Primärkreise (6a, 6b) der Kernreaktoren verbunden ist, um einen Druck des zweiten Austauschgases in dem jeweiligen Sekundärteil eines Wärmetauschers (7a, 7b) aufrechtzuerhalten, der im wesentlichen gleich einem Druck des Wärmeabführungsgases in dem Primärteil des Wärmetauschers (7a, 7b) ist.

15. Vorrichtung nach einem der Ansprüche 5 bis 14, **dadurch gekennzeichnet, dass** der Sekundärkreis (9) einen einzigen Verdichter (18) zum Verdichten des zweiten Austauschgases vor dem Passieren des Zwischentauschers (7) umfasst.

16. Vorrichtung nach Anspruch 15, **dadurch gekennzeichnet, dass** der Verdichter (18) einen zwischen 1,5 und 3 enthaltenen Verdichtungsgrad aufweist.
